# FASCICULE DE BREVET EUROPEEN

(11) **EP 1 690 714 B1**
(45) Date de publication et mention de la délivrance du brevet: **13.08.2008**
(21) Numéro de dépôt: 06290193.9
(22) Date de dépôt: 02.02.2006
(51) Int. Cl.: B60J 5/14, B60J 7/20

(54) **Véhicule convertible**
Cabriolet-Fahrzeug
Convertible vehicle

(30) Priorité: 15.02.2005 FR 0501525; 15.02.2005 FR 0501531; 08.03.2005 FR 0502336
(43) Date de publication de la demande: 16.08.2006
(73) Titulaire: Heuliez, 79142 Cerizay Cedex (FR)
(72) Inventeur: Guillez, Jean-Marc, 79140 Cirières (FR); Queveau, Paul, 79140 Montravers (FR); Queveau, Gérard, 79140 Le Pin (FR)
(74) Mandataire: Lemoine, Jean-Sébastien

(56) Documents cités:
- EP-A- 1 134 104
- DE-U1- 20 220 478
- US-A- 2 024 049
- US-A- 2 471 378
- US-A- 4 634 171
- US-B1- 6 312 041
- US-B2- 6 604 775
- PATENT ABSTRACTS OF JAPAN vol. 2003, no. 10, 8 octobre 2003 (2003-10-08) -& JP 2003 160063 A (YANO HIROSHI), 3 juin 2003 (2003-06-03)

## Description

L'invention concerne un véhicule convertible dans plusieurs configurations.

On connaît un véhicule du type comprenant un coffre arrière délimité vers l'arrière par une cloison arrière et vers le haut par une cloison supérieure qui est portée par un capot articulé à la caisse entre une position ouverte de l'avant vers l'arrière dans laquelle il découvre une ouverture permettant le passage du toit du véhicule, et une position fermée dans laquelle il recouvre l'ouverture, le capot comprenant, d'une part, un support articulé à la caisse et possédant un évidement, et, d'autre part, un couvercle articulé au support entre une position ouverte dans laquelle il découvre l'èvidement permettant un accès au coffre, et une position fermée dans laquelle il recouvre l'évidement.

Un tel véhicule est par exemple décrit dans le document US 6,604,775 B2. Cependant, dans un tel véhicule le capot porte les cloisons arrière et supérieure et est articulé à la caisse à son extrémité arrière inférieure. Aussi, lors de son ouverture de l'avant vers l'arrière, il se forme un débattement vers l'arrière particulièrement important, la cloison arrière se trouvant plus en arrière que la limite arrière du coffre. De ce fait, quand l'arrière du véhicule est à proximité immédiate d'un obstacle, il est possible que le capot vienne en contact contre cet obstacle et s'y abîme, ou coince une personne qui se trouverait entre le capot et l'obstacle.

La présente invention vise à avoir un véhicule ayant les mêmes avantages que ceux du véhicule décrit ci-dessus (accès aisé au coffre, que le toit soit rangé dans le coffre ou non, facile conversion du véhicule en coupé, cabriolet, pick up...), sans présenter l'inconvénient précité.

Selon l'invention, dans le véhicule du type précité, le capot forme la cloison supérieure, il est mobile par rapport à la cloison arrière, il est articulé à la caisse au voisinage du bord supérieur de la cloison arrière qui délimite vers l'arrière l'évidement du support, et la cloison arrière est formée par un portillon articulé à la caisse entre une position ouverte dans laquelle il découvre un passage qui permet un accès au coffre, et une position fermée dans laquelle il recouvre le passage.

Cette dissociation cinématique entre le capot et la cloison arrière du coffre, fait que, lors de l'ouverture vers l'arrière du capot, celui-ci ne s'étend pas vers l'arrière (ou très peu) au-delà de la cloison arrière du coffre. De ce fait, le débattement vers l'arrière du capot ouvert de l'avant vers l'arrière est considérablement réduit (voir annulé), ce qui limite considérablement les risques d'incidents et d'accidents quand l'arrière du véhicule est à proximité immédiate d'un obstacle.

D'autres particularités et avantages de la présente invention apparaîtront dans la description des modes de réalisation donnés à titre d'exemples non limitatifs et illustrés par les dessins annexés.

La figure 1 est une vue en perspective de trois-quart arrière de la partie arrière d'un véhicule convertible conforme à la présente invention,

La figure 2 est une vue en coupe longitudinale de la partie arrière du véhicule dans laquelle le capot du coffre est illustré à la fois dans sa position fermée et dans sa position ouverte,

La figure 3 est une vue en coupe longitudinale du coffre arrière du véhicule, le capot étant en position fermée et le couvercle étant illustré à la fois en position fermée et ouverte,

La figure 4 est une vue similaire à la figure 3, le couvercle étant en position escamotée,

La figure 5 est une vue en coupe longitudinale de la partie arrière du coffre, le capot étant en position fermée et le portillon étant en position fermée,

La figure 6 est une vue similaire à la figure 6, le portillon étant en position ouverte,

La figure 7 est une vue en coupe longitudinale illustrant la zone de jonction entre le portillon en position fermée et le capot en position fermée,

La figure 8 est une vue schématique du coffre avec un angle proche de l'angle droit entre le portillon et le capot, et

La figure 9 est une vue similaire à la figure 8, l'angle entre le portillon et le capot étant relativement proche de l'angle plat.

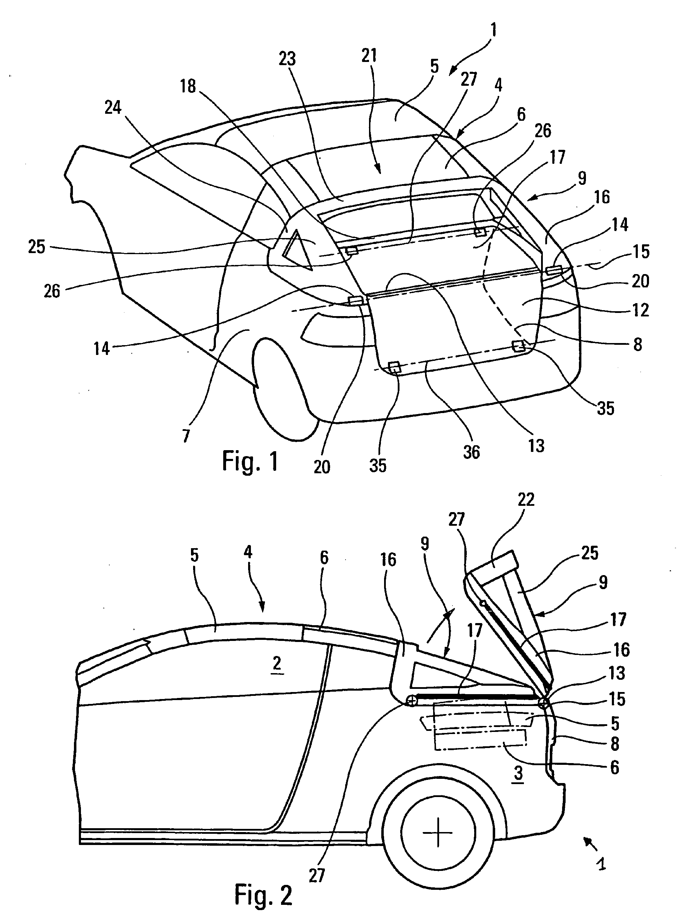

Comme on peut le voir aux figures 1 et 2, un véhicule 1 comprend un habitacle 2, un coffre arrière 3, et un toit 4 rigide. Le toit 4 est mobile entre une position déployée dans laquelle il recouvre l'habitacle 2, et une position pliée dans laquelle il est rangé dans le coffre 3. Comme on peut le voir à la figure 2, quand il est dans sa position rangée, le toit 3 est disposé dans la partie supérieure du coffre 3, la partie inférieure restant libre pour pouvoir recevoir des bagages.

Le toit 4 comprend un élément avant 5 et un élément arrière 6 articulé par son bord avant au bord arrière de l'élément avant 5 et par son bord arrière à la caisse 7 du véhicule 1.

Le coffre arrière 3 est délimité vers l'arrière par une cloison arrière 8, vers le haut par une cloison supérieure 9, vers le bas par une cloison inférieure 10, vers l'avant par une cloison avant 11 et vers les côtés par deux cloisons latérales 12.

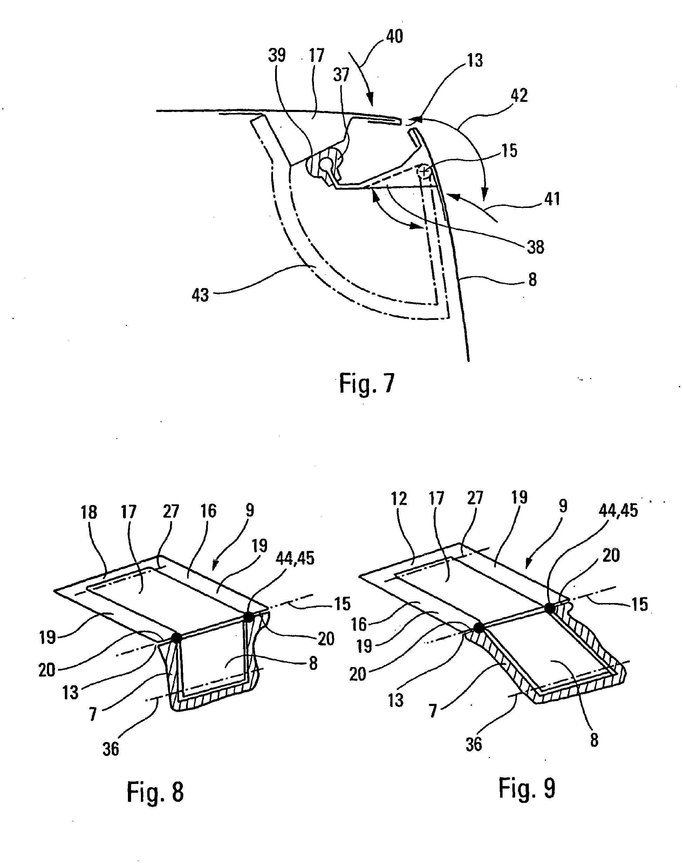

Dans les présents modes de réalisation, la cloison arrière 8 et la cloison supérieure 9 définissent un bord arrière supérieur 13 du coffre 3 qui correspond à une rupture de pente plus ou moins prononcée (cf. figures 8 et 9).

Dans le présent exemple, les cloisons inférieure 10, avant 11 et latérales 12 sont formées par la caisse 7.

La cloison supérieure 9 est mobile par rapport à la cloison arrière 8 et elle est formée par un capot 9 qui est articulé à la caisse 7 au voisinage du bord arrière supérieur 13 du coffre 3 (et donc au voisinage du bord supérieur de la cloison arrière 8). Le capot 9 est mobile entre une position ouverte de l'avant vers l'arrière dans laquelle il découvre une ouverture permettant le passage du toit 4 lors de son déplacement de l'une à l'autre de ses positions, et une position fermée dans laquelle il recouvre l'ouverture. Dans le présent mode de réalisation, l'articulation du capot 9 à la caisse 7 est réalisée par des pivots 14 qui assurent une rotation autour d'un axe de rotation 15 qui s'étend transversalement au véhicule le long du bord arrière supérieur 13 du coffre et du bord arrière du capot 9.

Cette dissociation cinématique entre le capot 9 et la cloison arrière 8 du coffre 3 lors de l'ouverture vers l'arrière du capot 9 fait que, comme on peut le voir à la figure 2, lors de cette ouverture, le capot 9 ne s'étend pas plus vers l'arrière (ou très peu) que la cloison arrière 8 du coffre 3. De ce fait, contrairement à ce qui se passait quand les cloisons arrière et supérieure étaient portées par un même support mobile par rapport au coffre, le débattement vers l'arrière du capot 9 ouvert de l'avant vers l'arrière est considérablement réduit (voir annulé), ce qui limite considérablement les risques d'incidents et d'accidents quand l'arrière du véhicule est à proximité immédiate d'un obstacle.

Le capot 9 comprend un support 16 qui est articulé à la caisse 7 et qui possède un évidement délimité vers l'arrière par la cloison arrière 8 du coffre 3. Le capot 9 comprend également un couvercle 17 qui est articulé par son bord avant au support 16. Le couvercle 17 est mobile entre une position ouverte de l'arrière vers l'avant dans laquelle il découvre l'évidement permettant un accès au coffre, et une position fermée dans laquelle il recouvre l'évidement.

Dans le présent mode de réalisation, le support 16 comprend une traverse avant 18 qui s'étend selon le plan général du capot 9, à laquelle est articulé le couvercle 17, et deux bandes latérales longitudinales 19 qui s'étendent de chaque côté de la traverse avant 15 selon le plan général du capot 9. De cette façon, le support 16 forme un U, l'évidement étant délimité vers l'avant par le bord arrière de la traverse avant 18 et vers les côtés par les bords latéraux des bandes latérales longitudinales 19. Le support 16 (et donc le capot 9) est articulé à la caisse 7 par les bords arrières 20 des bandes latérales longitudinales 19, à chaque bord arrière 20 étant associé un pivot 14.

De plus, comme on peut le voir aux figures 1 à 3, le support 16 peut comprendre une structure de raccordement 21 qui surmonte l'assemblage plan (ou sensiblement plan) en forme de U formé par la traverse avant 18 et les bandes latérales longitudinales 19, et qui raccorde visuellement cet assemblage à l'arrière du toit 4 en position déployée. La structure de raccordement 21 comprend un arceau 22 qui est porté par la traverse avant 18 et qui est accolé au bord arrière de l'élément arrière 6 du toit 4 quand le capot 9 est dans sa position fermée et quand le toit 4 est dans sa position déployée. L'arceau 22 comprend une poutre 23 qui s'étend transversalement au véhicule au voisinage du bord supérieur arrière de l'élément arrière 6 du toit, et des montants 24. Chaque montant relie une extrémité latérale de la poutre 23 à l'extrémité latérale correspondante de la traverse avant 18. La structure de raccordement comprend également des branches latérales longitudinales 25 qui définissent une courbe prolongeant la forme du toit 4. Chaque branche latérale longitudinale 25 s'étend de l'arceau 22 (de la jonction de la poutre 23 avec le montant 24 correspondant) à la partie arrière de la bande latérale longitudinale 19 correspondante de façon à prolonger visuellement la courbure du toit jusqu'à l'arrière du véhicule 1. Evidemment, la structure de renforcement est disposée de façon à ne pas gêner le déplacement du couvercle 17.

Dans les modes de réalisation illustrés aux figures 1, 2, 3, 8 et 9, l'articulation du couvercle 17 au support 16 est réalisée par des pivots 26 qui assurent une rotation autour d'un axe de rotation 27 qui s'étend transversalement au véhicule le long du bord arrière de la traverse avant 18 du support 16 et du bord avant du couvercle 17.

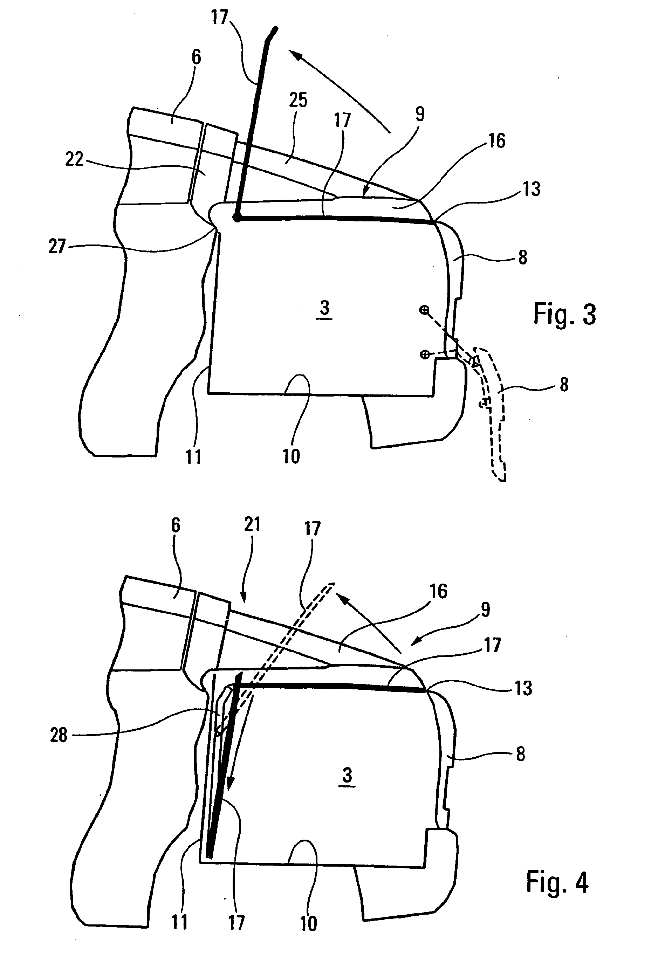

Dans le mode de réalisation illustré à la figure 4, le couvercle 17 est articulé de façon à s'ouvrir et à coulisser le long de la cloison avant 11 du coffre 3 de sorte que le véhicule se transforme en pick up. A cet effet, les cloisons latérales 12 du coffre comprennent, à proximité de la cloison avant 11, des glissières 28 sensiblement verticales guidant le couvercle 17 dans son mouvement.

Selon l'invention la cloison arrière 8 est formée par un portillon 8 qui est articulé à la caisse 7 entre une position ouverte dans laquelle il découvre un passage qui permet un accès au coffre et qui est délimité vers le haut par le capot 9 (de façon plus précise par le couvercle 17), et une position fermée dans laquelle il recouvre le passage.

Le portillon 8 s'étend, vers le bas, jusqu'à la proximité de la cloison inférieure 10 du coffre 3, et, vers le haut, jusqu'au capot 9. Quand il est en position ouverte, le portillon 8 permet d'avoir accès à la zone inférieure du coffre 3, et donc, il permet, quand le toit 4 est dans sa position pliée, d'avoir accès au volume de rangement disposé sous le toit 4.

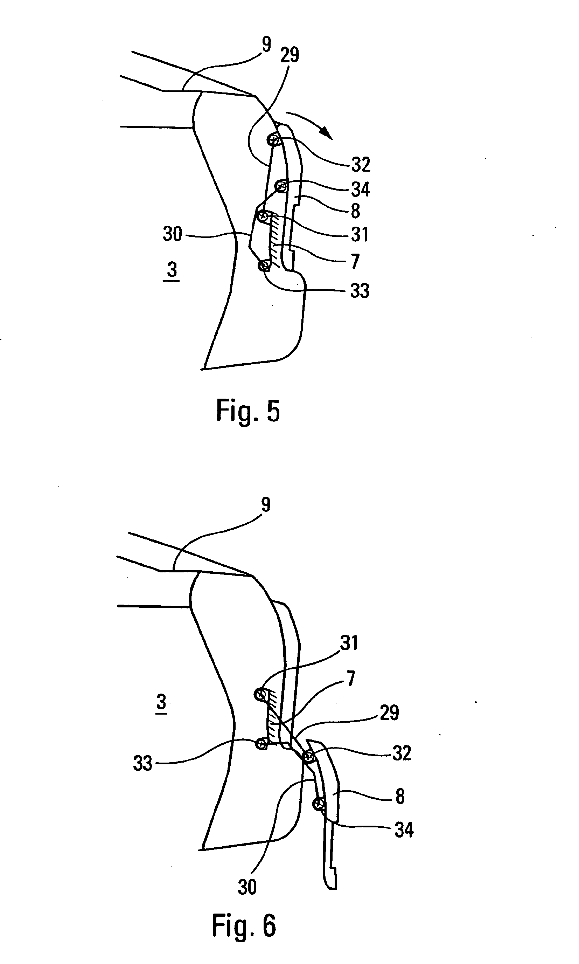

Dans le mode de réalisation illustré aux figures 3, 5 et 6, l'articulation du portillon 8 à la caisse 7 est réalisée par des biellettes 29,30 qui définissent un quadrilatère déformable. Ces biellettes 29,30 sont agencées de sorte que le mouvement d'ouverture du portillon 8 commence par un mouvement sensiblement vers l'arrière suivi d'un mouvement sensiblement vers le bas. De chaque côté du véhicule, le portillon 8 est relié à la caisse 7 par l'intermédiaire de deux biellettes 29,30. Une première biellette 29 est montée pivotante, d'une part, à sa première extrémité par rapport à la caisse 7 selon un axe 31 transversal au véhicule, et, d'autre part, à sa seconde extrémité par rapport au portillon 8 selon un axe 32 transversal au véhicule. De même la seconde biellette 30 est montée pivotante, d'une part, à sa première extrémité par rapport à la caisse 7 selon un axe 33 transversal au véhicule, et, d'autre part, à sa seconde extrémité par rapport au portillon 8 selon un axe 34 transversal au véhicule. Les axes 31,32,33,34 sont agencés de sorte que le portillon 8 en position ouverte dégage l'ensemble du passage et se retrouve au-dessous du bord inférieur du passage.

De préférence, le portillon 8 est le prolongement vers le bas et vers l'arrière du couvercle 17, ceux-ci ayant la même largeur.

Dans les modes de réalisation illustrés aux figures 1, 8 et 9, l'articulation du portillon 8 à la caisse 9 est réalisée par des pivots 35 assurant une rotation autour d'un axe de rotation 36 s'étendant transversalement au véhicule 1 le long du bord inférieur du portillon 8 et du bord arrière de la cloison inférieure 10 du coffre 3. Le portillon 8 en position ouverte est alors orienté horizontalement de façon à prolonger la cloison inférieure 10, comme dans un pick up.

Quand ils sont en position ouverte, le couvercle 17 et le portillon 8 dégagent une importante entrée vers le coffre 3, aucun élément de la caisse 7 ou du support 16 du capot 9 ne séparant l'évidement découvert par le couvercle 17 du passage découvert par le portillon 8.

Comme on peut le voir à la figure 7, quand ils sont en position fermée, le bord arrière du couvercle 17 est à proximité immédiate avec le bord supérieur du portillon 8. Un joint 37 assure l'étanchéité entre le portillon 8 et le couvercle 17. Dans le mode de réalisation illustré à cette figure, le joint 37 est porté par une patte 38 fixée au portillon 8 et vient en butée contre une surface de contact 39 portée par le couvercle 17. La surface de contact 39 est orientée de sorte que le joint 37 soit écrasé avec un minimum de contraintes tangentielles, que l'écrasement se fasse par la fermeture du couvercle 17 (flèche 40) ou par la fermeture du portillon 8 (flèche 41) . De plus, le joint 37 est disposé de sorte que le mouvement du capot 9 (double flèche 42) n'entraîne pas non plus de telles contraintes, ce qui dans le présent mode de réalisation est réalisé par le fait que l'axe de rotation 15 du capot 9 se trouve en arrière du joint 37. Egalement à la figure 7, on peut voir en tiret la structure en col de cygne 43 d'une patte reliant le support 16 à l'axe de rotation 15 évitant l'interférence du joint 37 et de la patte 38 lors du mouvement du capot 9. Chaque bande latérale longitudinale 19 porte une telle patte portant un col de cygne 43.

Le verrouillage du portillon 8 et du couvercle 17 est réalisé par des moyens de verrouillage 44,45 qui sont disposés au voisinage du bord arrière supérieur 13 du coffre 3 (au voisinage de la jonction entre le portillon 8 et le couvercle 17, c'est-à-dire au voisinage de la jonction entre le bord supérieur du portillon 8 et le bord arrière du couvercle 17). Le capot 9 comprend des premiers moyens de verrouillage 44 qui sont adaptés à verrouiller le couvercle 17 en position fermée au support 16. Ces premiers moyens de verrouillage 44 peuvent être réalisés, par exemple, par des tiges coulissantes ou par des crochets rotatifs portés par le support 16 et s'engageant dans des orifices réalisés dans le couvercle 17. De même, les seconds moyens de verrouillage 45 sont adaptés à verrouiller le portillon 8 en position fermée à la caisse 7. Ces seconds moyens de verrouillage 45 peuvent être réalisés, par exemple, par des tiges coulissantes ou par des crochets rotatifs portés par la caisse 7 et s'engageant dans des orifices réalisés dans le portillon 8.

La carrosserie du véhicule 1 est formée par les différents éléments de tôle formant la nappe visible de l'extérieur. Cette carrosserie est portée non seulement par la caisse 7, mais également par le toit 4, le support 16, le couvercle 17 et le portillon 18.

Le support 16 peut être soit formé par une structure en tôle emboutie auto-porteuse formant élément de la carrosserie, soit par une tôle qui forme un élément de la carrosserie et qui est portée par un cadre porteur. Il en est de même du couvercle 17 et du portillon 8.

De nombreuses modifications peuvent être apportées aux modes de réalisations illustrés aux figures.

Il pourrait ne pas y avoir de rupture de pente entre les cloisons arrière 8 et supérieure 9 du coffre, la liaison pouvant se faire par une courbure ayant un rayon de courbure plus ou moins prononcé.

Le couvercle pourrait être monté amovible du support du capot.

## Revendications

1. Véhicule (1) comprenant un coffre arrière (3) délimité vers l'arrière par une cloison arrière (8) et vers le haut par une cloison supérieure qui est portée par un capot (9) articulé à la caisse (7) au voisinage du bord arrière supérieur (13) du coffre (3) et mobile par rapport à la cloison arrière (8) entre une position ouverte de l'avant vers l'arrière dans laquelle il découvre une ouverture permettant le passage du toit (4) du véhicule, et une position fermée dans laquelle il recouvre l'ouverture, le capot (9) formant la cloison supérieure et comprenant, d'une part, un support (16) articulé à la caisse (7) et possédant un évidement, et, d'autre part, un couvercle (17) articulé au support (16) entre une position ouverte dans laquelle il découvre l'évidement permettant un accès au coffre (3), et une position fermée dans laquelle il recouvre l'évidement, la cloison arrière (8) étant formée par un portillon (8) articulé à la caisse (7) entre une position ouverte dans laquelle il découvre un passage qui permet un accès au coffre (3) et qui est délimité vers le haut par le capot (9), et une position fermée dans laquelle il recouvre le passage.

2. Véhicule (1) selon la revendication 1, **caractérisé en ce que** le portillon (8) et le couvercle (17) ont sensiblement la même largeur.

3. Véhicule (1) selon la revendication 1 ou 2, **caractérisé en ce qu'**un joint (37) est disposé entre le portillon (8) et le capot (9) de façon à réaliser l'étanchéité quand le portillon (8), le support (16) et le couvercle (17) sont en position fermée.

4. Véhicule (1) selon l'une des revendications 1 à 3, **caractérisé en ce que** le capot (9) comprend des premiers moyens de verrouillage (44) adaptés à verrouiller le couvercle (17) en position fermée au support (16) qui sont disposés au voisinage de la jonction entre le bord supérieur du portillon (8) et le bord arrière du couvercle (17).

5. Véhicule (1) selon l'une des revendications 1 à 4, **caractérisé en ce que** des seconds moyens de verrouillage (45) adaptés à verrouiller le portillon (8) en position fermée à la caisse (7) sont disposés au voisinage de la jonction entre le bord supérieur du portillon (8) et le bord arrière du couvercle (17).

6. Véhicule (1) selon l'une des revendications 1 à 5, **caractérisé en ce que** le support (16) comprend une traverse avant (18) à laquelle est articulé le couvercle (17), et deux bandes latérales longitudinales (19) s'étendant de chaque côté de la traverse avant (18) de façon à former un U, l'évidement étant délimité vers l'avant par la traverse avant (18) et vers les côtés par les bandes latérales longitudinales (19).

7. Véhicule (1) selon la revendication 6, **caractérisé en ce que** le capot (9) est articulé à la caisse au voisinage des bords arrières (20) des bandes latérales longitudinales (19) du support (16).

8. Véhicule (1) selon la revendication 7 dépendante de la revendication 4 ou l'une des revendications qui en dépend, **caractérisé en ce que** les premiers moyens de verrouillage (44) sont disposés à proximité des bords arrières (20) des bandes latérales longitudinales (19) du support (16).

9. Véhicule (1) selon la revendication 7 ou 8 dépendantes de la revendication 5 ou l'une des revendications qui en dépend, **caractérisé en ce que** les seconds moyens de verrouillage (45) sont disposés à proximité des bords arrières (20) des bandes latérales longitudinales (19) du support (16).

## Claims

1. A vehicle (1) having a rear boot (3) delimited at the rear by a rear partition (8) and at the top by an upper partition carried by a boot lid (9), said boot lid (9) being hinged to the bodywork (7) in the vicinity of the upper rear edge (13) of the boot (3) and being movable relative to the rear partition (8) between an open position, moving from the front to the rear, in which it uncovers an opening allowing the roof (4) of the vehicle to pass through, and a closed position in which it covers the opening, said boot lid (9) forming the upper partition and comprising, on the one hand, a support (16) hinged to the bodywork (7) and having an aperture, and, on the other hand, a cover (17) hinged to the support (16) between an open position in which it uncovers the aperture allowing access to the boot (3), and a closed position in which it covers the aperture, the rear partition (8) being formed by a gate (8) hinged to the bodywork (7) between an open position in which it uncovers an orifice which allows access to the boot (3) and is delimited at the top by the boot lid (9), and a closed position in which it covers the orifice

2. A vehicle (1) according to Claim 1, **characterized in that** the gate (8) and the cover (17) are substantially the same width.

3. A vehicle (1) according to Claim 1 or 2, **characterized in that** a joint (37) is disposed between the gate (8) and the boot lid (9) in such a way as to achieve water-tightness when the gate (8), support (16) and cover (17) are in the closed position.

4. A vehicle (1) according to one of Claims 1 to 3, **characterized in that** the boot lid (9) has first locking means (44), suitable for securing the cover (17) in the closed position to the support (16), which are disposed in the vicinity of the junction between the upper edge of the gate (8) and the rear edge of the cover (17).

5. A vehicle (1) according to one of Claims 1 to 4, **characterized in that** second locking means (45), suitable for securing the gate (8) in the closed position to the bodywork (7), are disposed in the vicinity of the junction between the upper edge of the gate (8) and the rear edge of the cover (17).

6. A vehicle (1) according to one of Claims 1 to 5, **characterized in that** the support (16) has a front crosspiece (18) to which the cover (17) is hinged, and two longitudinal side strips (19) extending from each side of the front crosspiece (18) to form a U, the aperture being delimited at the front by the front crosspiece (18) and at the sides by the longitudinal side strips (19).

7. A vehicle (1) according to Claim 6, **characterized in that** the boot lid (9) is hinged to the bodywork in the vicinity of the rear edges (20) of the longitudinal side strips (19) of the support (16).

8. A vehicle (1) according to Claim 7 dependent on Claim 4 or one of the claims depending on it, **characterized in that** the first locking means (44) are disposed close to the rear edges (20) of the longitudinal side strips (19) of the support (16).

9. A vehicle (1) according to Claim 7 or 8 dependent on Claim 5 or one of the claims depending on it, **characterized in that** the second locking means (45) are disposed close to the rear edges (20) of the longitudinal side strips (19) of the support (16).

## Patentansprüche

1. Fahrzeug (1) umfassend einen Heckkofferraum (3), begrenzt nach hinten durch eine hintere Wand (8) und nach oben durch eine obere Wand, welche getragen ist von einer Haube (9), angelenkt an den Wagenkasten (7) in der Nachbarschaft des hinteren oberen Rands (13) des Kofferraums (3) und beweglich ist bezüglich der hinteren Wand (8) zwischen einer von vorne nach hinten geöffneten Position, in der sie eine Öffnung aufdeckt, erlaubend die Passage des Fahrzeugdachs (4), und einer geschlossenen Position, in der sie die Öffnung abdeckt, die Haube (9) ausbildend die obere Wand und umfassend, einerseits eine Unterstützung (16) angelenkt an den Wagenkasten (7) und besitzend eine Aussparung, und andererseits einen Deckel (17) angelenkt an die Unterstützung (16) zwischen einer geöffneten Position, in der er die Aussparung aufdeckt, erlaubend einen Zugriff zu dem Kofferraum (3), und einer geschlossenen Position, in der er die Aussparung abdeckt, wobei die hintere Wand (8) mit einem Türchen (8) ausgebildet ist, angelenkt an den Wagenkasten (7) zwischen einer geöffneten Position, in der es eine Passage aufdeckt, die einen Zugriff zu dem Kofferraum (3) erlaubt und nach oben durch die Haube (9) begrenzt ist, und einer geschlossenen Position, in der sie die Passage abdeckt.

2. Fahrzeug (1) nach Anspruch 1, **dadurch gekennzeichnet, dass** das Türchen (8) und der Deckel (17) in etwa die gleiche Breite haben.

3. Fahrzeug (1) nach Anspruch 1 oder 2, **dadurch gekennzeichnet, dass** sich eine Dichtung (37) zwischen dem Türchen (8) und der Haube (9) befindet, so dass eine Abdichtung realisiert ist, wenn das Türchen (8), die Unterstützung (16) und der Deckel (17) in der geschlossenen Position sind.

4. Fahrzeug (1) nach einem der Ansprüche 1 bis 3, **dadurch gekennzeichnet, dass** die Haube (9) erste Verriegelungsmittel (44) umfasst, ausgelegt zum Verriegeln des Deckels (17) in der geschlossenen Position mit der Unterstützung (16), die sich in der Nachbarschaft der Verbindung zwischen dem oberen Rand des Türchens (8) und dem hinteren Rand des Deckels (17) befinden.

5. Fahrzeug (1) nach einem der Ansprüche 1 bis 4, **dadurch gekennzeichnet, dass** zweite Verriegelungsmittel (45) ausgelegt zur Verriegelung des Türchens (8) in der geschlossenen Position mit dem Wagenkasten (7) sich in der Nachbarschaft der Verbindung zwischen dem oberen Rand des Türchens (8) und dem hinteren Rand des Deckels (17) befinden.

6. Fahrzeug (1) nach einem der Ansprüche 1 bis 5, **dadurch gekennzeichnet, dass** die Unterstützung (16) einen vorderen Steg (18) umfasst, an den der Deckel (17) angelenkt ist, und sich zwei laterale longitudinale Bänder (19) an jeder Seite des vorderen Stegs (18) erstrecken, so dass ein U geformt ist, wobei die Aussparung nach vorne durch den vorderen Steg (18) und zu den Seiten durch die lateralen longitudinalen Bänder (19) begrenzt ist.

7. Fahrzeug (1) nach Anspruch 6, **dadurch gekennzeichnet, dass** die Haube (9) an den Wagenkasten in der Nachbarschaft der hinteren Ränder (20) der lateralen longitudinalen Bänder (19) der Unterstützung (16) angelenkt ist.

8. Fahrzeug (1) nach Anspruch 7 abhängig von Anspruch 4 oder einem der davon abhängigen Ansprüche, **dadurch gekennzeichnet, dass** die ersten Verriegelungsmittel (44) sich in der Nähe der hinteren Ränder (20) der lateralen longitudinalen Bänder (19) der Unterstützung (16) befinden.

9. Fahrzeug (1) nach Anspruch 7 oder 8 abhängig von Anspruch 5 oder einem der davon abhängigen Ansprüche, **dadurch gekennzeichnet, dass** die zweiten Verriegelungsmittel (45) sich in der Nähe der hinteren Ränder (20) der lateralen longitudinalen Bänder (19) der Unterstützung (16) befinden.
